# EUROPÄISCHE PATENTSCHRIFT

(11) **EP 1 994 996 B1**
(45) Veröffentlichungstag und Bekanntmachung des Hinweises auf die Patenterteilung: **20.06.2012**
(21) Anmeldenummer: 08009566.4
(22) Anmeldetag: 26.05.2008
(51) Int. Cl.: B09C 1/08, B09C 1/00, B09B 3/00, C04B 18/04, C02F 11/00

(54) **Verfahren zum Herstellen eines dauerhaft verarbeitbaren Baustoff aus kontaminierten mineralischen Gewässersediment-oder Bodenmaterial**
Method for producing a sustainably processable component from contaminated mineral water sediment or soil material
Procédé de fabrication d'une matière pouvant être traitée de manière durable à partir de matériau de sol ou de sédiment minéral de cours d'eau contaminé

(30) Priorität: 25.05.2007 DE 102007024703
(43) Veröffentlichungstag der Anmeldung: 26.11.2008
(73) Patentinhaber: INFRASOIL-SYSTEMS GmbH, 28203 Bremen (DE)
(72) Erfinder: Hartmann, Volker, 27321 Thedinghausen (DE); Hilmer, Uwe, 29525 Uelzen (DE)
(74) Vertreter: Philipp, Matthias

(56) Entgegenhaltungen:
- EP-A2- 0 500 199
- EP-A2- 0 756 904
- DE-A1- 19 936 324

## Beschreibung

Die Erfindung betrifft ein Verfahren zum Herstellen eines dauerhaft verarbeitbaren Baustoffs aus kontaminiertem mineralischen Gewässersediment- oder Bodenmaterial, insbesondere für tragende und nicht tragende Bauteile im Erd- und Straßenbau.

Böden oder auch Gewässersedimente, die häufig auch als Schlick bezeichnet werden, wie sie insbesondere bei Baggerarbeiten in Hafenbecken, Fahrrinnen und dergleichen anfallen, können- durch Schadstoffe belastet sein, bei denen es sich meist überwiegend um komplexgebundene Schwermetallionen und/oder andere häufig äußerst schädliche organische Verbindungen unterschiedlichster chemischer Art handelt. Dies -hat zur Folge; daß man bei Baggerarbeiten oder dergleichen anfallende Böden oder Gewässersedimente keinesfalls auf Halden deponieren kann, wie dies früher üblich war und auch heute noch in nicht unerheblichem Ausmaße geschieht, da die-enthaltenen Schadstoffe im Verlaufe der Zeit-durch Auswaschung ins Grundwasser gelangen und dieses belasten können.

Es kommt hinzu, daß anfallende Böden oder Gewässersedimente, selbst wenn sie in Trocknungsfeldern zwischengelagert und durch Verdunstung entwässert werden, die notwendigen Kriterien einer Verarbeitung als Baustoffe oder Deponierfähigkeit in bodenmechanischer Hinsicht in bezug auf Stand- und Dauerfestigkeit, Befahrbarkeit usw. regelmäßig nicht erfüllen.

Aufgrund der genannten negativen Eigenschaften scheiden häufig in erheblichen Mengen anfallende Gewässersedimente aus den gleichen Gründen und bei gleicher Aufarbeitung durch Entwässerung ersichtlich auch als Baustoff, -beispielsweise für Erd- und Straßenbaumaterial, aus, weil- sie auch bei einer solchen Verwendung die gleichen negativen Wirkungen entfalten und/oder nicht die erforderlichen Festigkeitseigenschaften aufweisen.

Der vorliegenden Erfindung liegt daher die Aufgabe zugrunde, ein Verfahren zu schaffen, mit dem kontaminierte Böden oder Gewässersedimente zu einem dauerhaft verarbeitbaren Baustoff aufbereitet werden können, der kontinuierlich produziert, zwischengelagert und jederzeit verarbeitet werden kann.

Das Dokument EP 0500199-A2 offenbart ein Verfahren zum Aufbereiten kontaminierter Gewässersedimente gemäß dem Oberbegriff des Anspruchs 1.

Das Dokument EP 0 756 904-A2 offenbart eine Methode zur Bodenaufbereitung mit Hilfe von Organophilem Bentonit in einer Konzentration von 0.02 -1,25%. Ein weiteres Dokument DE 19936324-A1 offenbart ein Verfahren zur Aufbereitung von Abfallen und Schlämmen, das die Verwendung von 3,2 % Harnstoff ein schließt.

Die gestellet Aufgabe der Herstellung eines dauerhaft verarbeitbaren Baustoffes wird erfindungsgemäß durch ein Verfahren nach Anspruch 1 gelöst.

Unter dauerhafter Verarbeitbarkeit des Baustoffs wird im Rahmen der Erfindung verstanden, daß der erfindungsgemäß hergestellte Baustoff während einer Zeitdauer von mindestens zehn Jahren, bevorzugt zwanzig Jahren, fünfzig Jahren oder achtzig Jahren, eine maximale Festigkeit von 0,3 MPa, bevorzugt 0,25 MPa, weiter bevorzugt 0,2 MPa und weiter bevorzugt 0,1 MPa nicht überschreitet. Die Ausgangsfestigkeit des Baustoffs unmittelbar nach der erfindungsgemäßen Aufbereitung liegt im Bereich von etwa 0,05 bis 0,1 MPa.

Durch Zugabe von organophilem Bentonit werden insbesondere Verunreinigungen durch Kohlenwasserstoffe gebunden. Harnstoff bindet besonders Schwermetalle wie Kupfer und Zink. Das Bindemittel bewirkt eine Stabilisierung des Materials, so daß ein tragfähiger Baustoff mit dichtenden-und tragenden Eigenschaften entsteht.

Bezüglich des Tonmehls, welches zu 10 - 75% aus Kaolinit und zu 5 - 25% aus Quarzit bestehen kann, hat sich gezeigt, daß dieses vorteilhafterweise nicht quellfähig ist,-wobei diese natürliche Eigenschaft dem feinkörnigen Kaolinit eine kristallchemische Stabilität und geochemische Resistenz verleiht. Durch die nicht vorhandene Möglichkeit eines innerkristallinen Quellens kann demgemäß keine Ionendiffusion stattfinden:

Es hat sich bspw. gezeigt, daß die für Abdichtungsmaßnahmen erforderlichen k_{f}-Werte von 10⁻¹⁰ m/s bei Verwendung von kaolinitischem Ton(mehl) ohne weiteres erreicht werden, und daß die hiermit hergestellten Massen weiterhin eine Restplastizität besitzen, um- bspw. dem Setzungsdruck des Deponiegutes ohne Rißbildung nachgeben zu können.

Auf den hydratsbeladenen Plättchenoberflächen -der Kaolinite findet keine nennenswerte Korrosion statt. Lediglich an den Kornrändern kann es zu einem Ionenaustausch und Absorptionen kommen. Die durch Fällungsreaktionen entstehenden Produkte werden sowohl im amorphen Zustand erstarren als auch in feinstkörniger Form in den feinen Poren abgeschieden. Durch das ungeregelte Wachstum dieser Porenzemente wird die Durchlässigkeit (k_{f}-Wert) der konditionierten Gewässersedimente weiter herabgesetzt sowie die Langzeitstabilität gewährleistet bzw. erhöht.

Durch Absorption organischer Verbindungen wird die Stabilität ebenfalls nicht beeinträchtigt. Organische Bestandteile in den Gewässersedimenten bis ca. 20% haben aufgrund der spezifischen Eigenschaften der kaolinitischen Tonmehle keine negativen Auswirkungen auf die Langzeitstabilität.

Bevorzugt ist vorgesehen, daß das Material mit 7,5 - 8,5%, bevorzugt 8% Tonmehl, 0,15 - 0,25%, bevorzugt 0,2% organophilem Bentonit, 1 - 3%, bevorzugt 2% Harnstoff und 3 - 5%, bevorzugt 4% hydraulischem Bindemittel vermischt wird.

Vorteilhafterweise enthalten die Böden bzw. Gewässersedimente maximal 50 Gew.-% Sand.

In einer Ausgestaltung der Erfindung erfolgt eine Verwendung eines zumindest weitgehend karbonatfreien kaolinitischen Tonmehls.

Bevorzugt ist vorgesehen, daß ein Tonmehl mit einer Mahlfeinheit bis ca. 1,5 mm verwendet wird, wobei bevorzugt mindestens ein Kornanteil von ca. 70% bis 0,002 mm Größe vorhanden ist, also einem sehr erheblichen höchstfeinen Kornanteil.

Zweckmäßigerweise werden die Gewässersedimente vor dem Vermischen belüftet, und zwar bevorzugt beim Zerkleinern.

Es hat sich weiterhin als höchst zweckmäßig herausgestellt, wenn die-bei der Aufbereitung erhaltene Mischung, unabhängig davon, ob den aufzubereitenden Gewässersedimenten nur organophiler Bentonit oder Harnstoff oder beides homogen zugemischt worden ist, vor einer Deponierung und vorzugsweise auch vor einer Weiterverarbeitung als Baustoff zwischengelagert wird, und zwar vorzugsweise wenigstens- einen Tag, wobei das insoweit aufbereitete Gut bei der Zwischenlagerung vor Witterungseinflüssen und insbesondere Niederschlägen geschützt werden sollte.

Das zugeschlagene hydraulische Bindemittel besteht zu 5 - 15 Gew.%, bevorzugt 10 Gew.-% aus Portlandzementklinker, zu 60 - 80 Gew.-%, bevorzugt 70 Gew.-% aus Hüttensandmehl und zu 10 - 30 Gew.-%, bevorzugt 20 Gew.-% aus Weißfeinkalk bestehen. Unter Hüttensandmehl wird vorliegend ein Material mit folgender Zusammensetzung verstanden: ca. 30 - 45 Gew.-% CaO, 30-45 Gew.-% SiO₂, 5-15 Gew.-% Al₂O₃, 4- 17 Gew.-% MgO, 0,5 - 1 Gew.-% S und Spuren anderer Elemente, bevorzugt mit der Zusammensetzung: CaO 35 - 45 Gew.-%, SiO₂ 35 - 40 %, Al₂O₃ 10 -15 %, MgO 5 -15 %, Fe 0,2 - 0,3 %, Mn 0,1 - 0,2 %, S 0,5 - 1,5 %, TiO₂ 0,5 - 1,5 %, K₂O 0,5 - 1,0 %, Na₂O 0,2 - 1,0 %. Die-Mahlfeinheit nach Blain liegt bevorzugt im Bereich von 4200 cm²/g +/- 100 cm²/g.

Hierzu sei noch ausgeführt, daß kaolinitische Tone relativ rasch mit hydraulischen Zuschlägen reagieren und zu chemischen Zementen führen, und-zwar im wesentlichen nach dem Reaktionschema: Tonmineral + Bindemittel = Ca-Tonmineral + Neubildung. Das dabei entstehende Reaktionsprodukt stellt eine komplex zusammengesetzte Mischung aus Tonmineralien (hervorgegangen aus dem primären Gewässerschlick und dem Tonzusatz), neugebildeten hydratisierten Ca/Al-Silikaten, Metallhydroxiden und organischen Komplexen dar und ist in sich chemisch stabil, wenn die Wasserzufuhr eingeschränkt oder völlig unterbunden wird.

Der Mechanismus der Verfestigung eines mit einem Bindemittel und Ton vermischten Ausgangsmaterials läuft nach Maßgabe der Diffusionsprozesse, vornehmlich in den feinstkörnigen Bereichen, nach Art einer asymptotischen Annäherung in Richtung auf ein thermodynamisches Gleichgewicht ab. Aufgrund der erfindungsgemäß geringen Zuschlagmengen an Bindemittel kann auch nach einer sehr langen Zeit keine erhebliche Verfestigung eintreten, so daß das aufbereitete Material auch nach langen Zeiträumen noch ähnlich wie ein natürliches Bodenmaterial verarbeitet werden kann.

Durch die Zugabe von Harnstoff wird insbesondere eine Bindewirkung von Cu und Zn erreicht, wobei der in den schädlichen organischen Bestandteilen der Gewässersedimente enthaltene Kohlenstoff mit dem Harnstoff bestimmte chemische Verbindungen eingeht, die zu einer Bindung der Schadstoffe sowie zu einer weiteren Verfestigung führen.

Erfindungsgemäß ist vorgesehen, daß der Harnstoff einen Amidstickstoffgehalt von 40 - 50%, insbesondere von 46% aufweisen kann. Obwohl grundsätzlich Harnstoffgranulat verwendet werden kann, ist es zweckmäßig, geprillten Harnstoff zu verwenden, der sich aufgrund seiner Feinheit schnell und gleichmäßig mit dem getrockneten Gewässersediment vermischt. Es kann vorgesehen sein, daß der Harnstoff einen Biuretgehalt von maximal 1,2% aufweist.

Das erfindungsgemäße Verfahren und eine Einrichtung zur Durchführung des Verfahrens werden nachstehend anhand einer schematisierten Zeichnung weiter wie folgt erläutert.

Die aus einem Gewässer 1 wie bspw. einem Hafenbecken, einer Fahrrinne od. dgl. mittels eines (Eimerketten-)Baggers 2 od. dgl. ausgebaggerten Gewässersedimente bzw. Böden 3⁻ werden zunächst in geeigneter Weise einem Trockenfeld 4 zugeführt und dort auf natürliche Weise (insbesondere durch Verdunstung) -bis auf wenigstens 130% Wassergehalt (bezogen auf das Trockengewicht der Sedimente 3) entwässert.

Soll aus bestimmten Gründen eine ggf. erheblich stärkere Entwässerung auf 70 oder 50% erfolgen, kann ggf. vor der weiteren Aufbereitung noch eine mechanische (Nach-)Entwässerung oder Trocknung stattfinden, oder die ausgebaggerten Gewässersedimente 3- können auch ohne vorherige natürliche Entwässerung einer mechanischen Entwässerung zugeführt werden.

Im Falle der Aufbereitung von Böden wird ein Mindestwassergehalt sichergestellt, der gewährleistet, daß eine Verarbeitung mit den Zusatzstoffen gemäß der Erfindung erfolgen kann. Erforderlichenfalls wird zu trockenes Material befeuchtet.

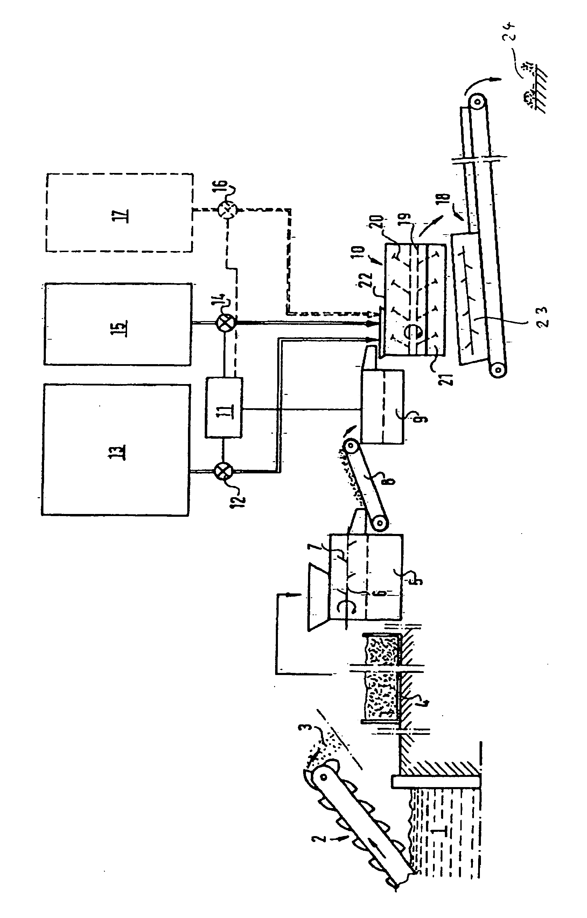

Nachdem das Aufbereitungsmaterial den vorgegebenen Wassergehalt erreicht hat, wird es einem Shredder 5 zugeführt, der mit (wenigstens) einer in der Zeichnung lediglich mit einer strichpunktierten Linie angedeuteten Welle 6 versehen ist, auf welcher messerartige Zerkleinerungselemente 7 angeordnet sind, welche die entwässerten Gewässersedimente 3 (vor-)zerkleinern, dabei (vor-)homogenisieren und zugleich belüften.

Die entwässerten, zerkleinerten, belüfteten und damit auch homogenisierten aufzubereitenden Gewässersedimente gelangen danach mittels eines Förderers 8 zu einer Wiegeeinrichtung 9, bei welcher es sich im Hinblick auf den kontinuierlich angestrebten Aufbereitungsbetrieb um eine Bandwaage od.dgL handelt, und von der Wiegeeinrichtung 9 in einen Doppelwellen-Zwangsmischer 10.

Zugleich gelangen von der Wiegeeinrichtung 9 (elektrische) Signale, welche die zeitliche Menge des dem Mischer 10 zugeführten Sedimentmaterials angeben, zu einer Steuereinheit 11, welche diese (Mengen-)Signale nicht nur u.a. registriert, sondern auch rechnerisch verarbeitet und ihrerseits Steuersignale an eine Auslaßeinrichtung 12 in der Art einer Zellenschleuse od.dgl. weitergibt, die einem Vorratsbehälter 13 für kaolinitisches Tonmehl nachgeordnet ist und von der Steuereinheit 11 so gesteuert wird, daß dem Mischer 10 bzw. dem ihm zugeführten Gewässersedimentmaterial 3 jeweils kontinuierlich eine -bestimmte Menge kaolinitischen Tonmehls zugegeben wird, und zwar bei dem dargestellten Ausführungsbeispiel 8% kaolinitisches Tonmehl (bezogen auf die Trockenmasse der Gewässersedimente), wobei diese Menge, die zwischen- 5- und 10% liegen kann, im vorliegenden Fall ausreicht, weil die Gewässersedimente relativ stark entwässert worden sind, so daß der Wassergehalt etwa bei 90% liegt.

Außerdem steuert die Steuereinheit 11 eine Auslaßeinrichtung 14 eines Vorratsbehälters 15, in dem sich hydraulisches Bindemittel befindet, wobei den Gewässersedimenten 3 im Mischer 10 - gleichsam als "Starter" zur alsbaldigen Erwirkung einer ausreichenden Materialfestigkeit nach Aufbereitung - 4% Bindemittel (bezogen auf das Gewicht der Sedimentstrockenmasse) zugegeben wird.

Es sei ferner darauf verwiesen, daß die Steuereinheit 11 weiterhin mit einer Auslaßeinrichtung 16 eines Vorratsbehälters 17 in Funktionsverbindung steht, in dem sich organophiler Bentonit und/oder geprillter Harnstoff befinden, welche den aufzubereitenden Gewässersedimenten 3 sowie dem kaolinitischen Tonmehl und dem Bindemittel gesteuert bzw. dosiert zugegeben werden kann, und zwar je nach Beschaffenheit des Aufbereitungsgutes einerseits und dessen Bestimmungszweck andererseits in einer Menge zwischen ca. 0,1 - 0,5% bzw-. 1 - 5% (wiederum bezogen auf das- Trockengewicht der Gewässersedimente).

Es sei noch darauf verwiesen, daß-das den-aufzubereitenden Gewässersedimenten 3 aus dem Vorratsbehälter 13 dosiert zugeführte kaolinitsche Tonmehl bei einer Mahlfeinheit bis ca. 1,5 mm etwa 70% Kornanteil im Bereich bis 0,002 mm enthält.

Aus dem Mischer 10 gelangt das im wesentlichen- fertig aufbereitete Gut, das von einemweiteren Shredder 23 homogenisiert- wird, über einen Förderer 18 zu einer Zwischenlagerstelle 24, wird dort einen Tag witterungsgeschützt zwischengelagert und sodann als Baustoff weiterverwendet.

Dabei sei noch darauf verwiesen, daß die an den beiden Wellen 19 des Mischers 10 angeordneten Schaufeln 20 während des Betriebes (die beiden Wellen 19, 19 liegen horizontal nebeneinander) so ineinandergreifen, daß sie gegenseitig gleichsam in der Art von Abstreifern eine Selbstreinigungswirkung entfalten.

Weiterhin sei darauf verwiesen, daß der Aufbereitungsprozeß keineswegs kontinuierlich durchgeführt werden muß. Vielmehr kann es sogar zweckmäßig sein, ihn diskontinuierlich durchzuführen, und zwar insbesondere im Hinblick auf die angestrebte innige und homogene Vermischung der einzelnen Materialkomponenten im Mischer 10 sowie die nachfolgend erforderliche Entleerung. Bei einer diskontinuierlichen Arbeitsweise kann der Boden 21 des im wesentlichen zylindrischen Mischergehäuses 22 über einen Bogenwinkel von 120° geöffnet werden, so daß sich im Vergleich zu bekannten Doppelwellen-Zwangsmischern eine etwa vierfach so große Auslaßöffnung ergibt und eine problemlose Entleerung möglich ist. Mögliche Inhomogenitäten werden durch einen nachgeschalteten Shredder 23 beseitigt.

Wie bereits weiter oben angedeutet worden ist, sind zahlreiche weitere Modifikationen sowohl verfahrensmäßig als auch einrichtungsmäßig möglich. So kann bspw. -ein Silikat wie insbesondere industrielle Fällungskieselsäure als- "Starter" zugegeben werden, und zwar zweckmäßigerweise ebenfalls in den Mischer 10, und zwar vorzugsweise bei diskontinuierlichem Betrieb, um eine sehr homogene Mischung herstellen zu können.

Durch das speziell zusammengesetzte -hydraulische Bindemittel bleibt der hergestellte Baustoff über einen langen Zeitraum (mindestens 10, 20, 50 oder 80 Jahre) verarbeitbar. Das Material kann dadurch kontinuierlich produziert, zwischengelagert und jederzeit verarbeitet werden. Das Material kann als Baustoff verwendet- werden für Auffüllungen über Wasser, tragende und/oder dichtende Konstruktion im Deichbau, tragende Konstruktion im Straßenunterbau, Auffüllung, nicht tragend, im Straßenbau, Bodenaustausch, Oberflächen- und Basisdichtungen bei Deponiebau. Der erfindungsgemäße Baustoff bleibt dauerhaft verarbeitbar und-kann ein- und ausgebaut und wiederverwendet werden.

### Bezugszeichenliste

- 1: Gewässer
- 2: Bagger
- 3: Gewässersedimente
- 4: Trockenfeld
- 5: Shredder
- 6: Shredderwelle
- 7: Zerkleinerungselemente
- 8: Förderer
- 9: Wiegeeinrichtung
- 10: Mischer
- 11: Steuereinheit
- 12: Auslaßeinrichtung (von 13)
- 13: Vorabbehälter
- 14: Auslaßeinrichtung (von 15)
- 15: Vorratsbehälter
- 16: Auslaßeinrichtung
- 17: Vorratsbehälter
- 18: Förderer
- 19: Wellen
- 20-: Schaufeln
- 21: Boden
- 22: Mischergehäuse
- 23: Shredder
- 24: Zwischenlagerstelle

## Patentansprüche

1. Verfahren zum Herstellen eines dauerhaft verarbeitbaren Baustoffs aus kontaminiertem mineralischen Gewässersediment- oder Bodenmaterial (3), wobei das Material auf einen Wassergehalt von maximal 130 %, bezogen auf sein Trockengewicht, entwässert und homogen zerkleinert wird, und das zerkleinerte Material (3) mit, bezogen auf sein Trockengewicht, a) 5 - 10% Tonmehl, b) 0,1 - 0,5% organophilem Bentonit oder 1 - 5% Harnstoff und c) 2 - 5% hydraulischem Bindemittel homogen vermischt (10) wird, **dadurch gekennzeichnet dass** das hydraulische Bindemittel 5 - 15 Gew.-%, insbesondere 10 Gew.-% Portlandzementklinker, 60 - 80 Gew.-%, insbesondere 70 Gew.-% Hüttensandmehl und 10-30 Gew.-%, insbesondere 20 Gew.-% Weißfeinkalk aufweist und die Harnstoffzugabe bei 1-5% Trockengewicht des kontaminierten Bodenmaterials liegt.

2. Verfahren nach Anspruch 1, **dadurch gekennzeichnet, daß** das Material, sofern es sich um Bodenmaterial handelt, auf einen Wassergehalt von 5-40 Gew.-% gebracht wird, bezogen auf das Trockengewicht.

3. Verfahren nach Anspruch 1, **dadurch gekennzeichnet, daß** das Material mit 7,5 - 8,5%, insbesondere 8% Tonmehl, 0,15 - 0,25%, insbesondere 0,2% organophilem Bentonit, 1 - 3%, insbesondere 2% Harnstoff und 3 - 5%, insbesondere 4% hydraulischem Bindemittel vermischt wird.

4. Verfahren nach einem der vorangehenden Ansprüche, **dadurch gekennzeichnet, daß** Gewässersedimente (3) mit einem Anteil von maximal 50 Gew.-% Sand verarbeitet werden.

5. Verfahren nach einem der vorangehenden Ansprüche, **dadurch gekennzeichnet, daß** das Material (3) vor und nach dem Vermischen belüftet und homogenisiert wird.

6. Verfahren nach einem der vorangehenden Ansprüche, **dadurch gekennzeichnet, daß** das Tonmehl zu 10 - 75% aus Kaolinit und zu 5 - 25% aus Quarzit besteht.

7. Verfahren nach einem der vorangehenden Ansprüche, **dadurch gekennzeichnet, daß** das Tonmehl eine Mahlfeinheit bis ca. 1,5 mm aufweist.

8. Verfahren nach einem der vorangehenden Ansprüche, **gekennzeichnet durch** ein Tonmehl mit mindestens ca. 70% Kornanteil bis 0,002 mm.

9. Verfahren nach einem der vorangehenden Ansprüche, **dadurch gekennzeichnet, daß** die Mischung vor einer Deponierung oder Weiterverarbeitung als Baustoff mindestens einen Tag lang zwischengelagert (24) wird.

10. Verfahren nach einem der vorangehenden Ansprüche, **dadurch gekennzeichnet, daß** der Harnstoff einen Amidstickstoffgehalt von 40 - 50%, insbesondere von 46% aufweist.

11. Verfahren nach einem der vorangehenden Ansprüche, **dadurch gekennzeichnet, daß** der Harnstoff geprillt ist.

12. Verfahren nach einem der vorangehenden Ansprüche, **dadurch gekennzeichnet, daß** der Harnstoff einen Biuretgehalt von maximal 1,2% aufweist.

## Claims

1. A method for the production of a lastingly workable building material from contaminated mineral aquatic sediment- or soil material (3), where the material is dewatered to a water content not exceeding 130% of its dry weight and homogeneously comminuted, and the resulting comminuted material (3) is homogeneously mixed (10) with, in terms of its dry weight, a) 5 - 10% powdered clay, b) 0.1 - 0.5% organophilic bentonite or 1 - 5% urea and c) 2 - 5% hydraulic binder, **characterised in that** the hydraulic binder comprises 5 - 15 wt % and in particular 10 wt % Portland cement clinker, 60 - 80 wt % and in particular 70 wt % ground granulated blast furnace slag and 10 - 30 wt % and in particular 20 wt % fine ground high-calcium lime, and that the proportional admixture of urea constitutes 1 - 5% of the dry weight of the contaminated soil material.

2. A method in accordance with Claim 1, **characterised in that**, where soil material is involved, the water content of the material is reduced to 5 - 40 wt % of its dry weight.

3. A method in accordance with Claim 1, **characterised in that** the material is mixed with 7.5 - 8.5% and in particular 8% powdered clay, 0.15 - 0.25% and in particular 0.2% organophilic bentonite, 1 - 3% and in particular 2% urea and 3 - 5% and in particular 4% hydraulic binder.

4. A method in accordance with one of the preceding Claims, **characterised in that** aquatic sediments (3) are worked with a proportion of sand not exceeding 50 wt %.

5. A method in accordance with one of the preceding Claims, **characterised in that** the material (3) is aerated and homogenised both before and after mixing.

6. A method in accordance with one of the preceding Claims, **characterised in that** the powdered clay consists of 10 - 75% kaolinite and 5 - 25% quartzite.

7. A method in accordance with one of the preceding Claims, **characterised in that** the powdered clay has a grinding fineness of up to approximately 1.5 mm.

8. A method in accordance with one of the preceding Claims, **characterised by** the use of powdered clay in which not less than approximately 70% of the grain content has a particle size up to 0.002 mm.

9. A method in accordance with one of the preceding Claims, **characterised in that** the resulting mixture is held in temporary storage (24) for at least one full day prior to laying or further working as a building material.

10. A method in accordance with one of the preceding Claims, **characterised in that** the urea has an amide nitrogen content of 40 - 50% and in particular 46%.

11. A method in accordance with one of the preceding Claims, **characterised in that** the urea is prilled.

12. A method in accordance with one of the preceding Claims, **characterised in that** the urea has a biuret content not exceeding 1.2%.

## Revendications

1. Procédé de production d'un matériau de construction avec aptitude au façonnage durable à partir d'un sédiment aquatique minéral contaminé - ou d'un matériau de sol (3), dans lequel le matériau est essoré jusqu'à une teneur en eau ne dépassant pas 130% de son poids sec et réduit en poudre de façon homogène, et le matériau réduit en poudre résultant (3) est mélangé de façon homogène (10) avec, en termes de son poids sec, a) 5 à 10% d'argile en poudre, b) 0,1 à 0,5% de bentonite organophile ou 1 à 5% d'urée et c) 2 à 5% de liant hydraulique, **caractérisé en ce que** le liant hydraulique comprend 5 à 15 % en poids et notamment 10 % en poids de clinker de ciment Portland, 60 à 80 % en poids et notamment 70 % en poids de scories de haut fourneau moulues granulées et 10 à 30 % en poids et notamment 20 % en poids de chaux à haute teneur en calcium finement broyée, et **en ce que** le mélange proportionnel d'urée constitue 1 à 5% du poids sec du matériau de sol contaminé.

2. Procédé selon la Revendication 1, **caractérisé en ce que**, là où le matériau de sol intervient, la teneur en eau du matériau est réduite à 5 à 40 % en poids de son poids sec.

3. Procédé selon la Revendication 1, **caractérisé en ce que** le matériau est mélangé avec 7,5 à 8,5% et notamment 8% d'argile en poudre, 0,15 à 0,25% et notamment 0,2% de bentonite organophile, 1 à 3% et notamment 2% d'urée et 3 à 5% et notamment 4% de liant hydraulique.

4. Procédé selon l'une quelconque des revendications précédentes, **caractérisé en ce que** les sédiments aquatiques (3) sont travaillés avec une proportion de sable ne dépassant pas 50 % en poids.

5. Procédé selon l'une quelconque des revendications précédentes, **caractérisé en ce que** le matériau (3) est aéré et homogénéisé avant et après le mélange.

6. Procédé selon l'une quelconque des revendications précédentes, **caractérisé en ce que** la boue en poudre est constituée de 10 à 75% de kaolinite et de 5 à 25% de quartzite.

7. Procédé selon l'une quelconque des revendications précédentes, **caractérisé en ce que** l'argile en poudre a une finesse de broyage de jusqu'à environ 1,5 mm.

8. Procédé selon l'une quelconque des revendications précédentes, **caractérisé par** l'utilisation d'argile en poudre dans laquelle pas moins d'environ 70% de la teneur en grain a une distribution granulométrique de jusqu'à 0,002 mm.

9. Procédé selon l'une quelconque des revendications précédentes, **caractérisé en ce que** le mélange résultant est contenu dans un lieu de stockage temporaire (24) pendant au moins une journée entière avant sa pose ou un façonnage plus poussé en tant que matériau de construction.

10. Procédé selon l'une quelconque des revendications précédentes, **caractérisé en ce que** l'urée a une teneur en azote amide de 40 à 50% et notamment de 46%.

11. Procédé selon l'une quelconque des revendications précédentes, **caractérisé en ce que** l'urée est grelonée.

12. Procédé selon l'une quelconque des revendications précédentes, **caractérisé en ce que** l'urée a une teneur en biuret ne dépassant pas 1,2%.
